# EUROPEAN PATENT APPLICATION

(11) **EP 4 597 044 A1**
(43) Date of publication of application: **06.08.2025**
(21) Application number: 25154496.1
(22) Date of filing: 28.01.2025
(51) Int. Cl.: G01D 5/252, G01D 21/00, G01F 23/38, G01P 3/00, G01P 13/00, G01D 11/24

(54) **MEASUREMENT DEVICE AND ROTATION DETECTION METHOD**

(30) Priority: 01.02.2024 JP 2024014324
(71) Applicant: Yokogawa Electric Corporation, Tokyo 180-8750 (JP)
(72) Inventor: HAMADA, Taihei, Musashino-shi, Tokyo, 180-8750, (JP)
(74) Representative: Winter, Brandl - Partnerschaft mbB

(57) **Abstract**

A measurement device includes a casing in which a storage space is formed thereinside; a board that has a mounting surface, and that is housed in the storage space; a magnetic sensor mounted on the mounting surface; and a detecting unit that is arranged outside the casing, and that detects a state quantity of a measured medium. A protruding portion that is formed by protruding an inner circumferential surface of the storage space is formed in the casing. A concave portion formed by recessing toward the storage space from an outer circumferential surface of the casing is formed in the protruding portion. The board is arranged such that the mounting surface faces the protruding portion.

## Description

### BACKGROUND OF THE INVENTION

### 1. Field of the Invention

The present invention relates to a measurement device and a rotation detection method.

### 2. Description of the Related Art

A measurement device that measures the flow rate, pressure, temperature, differential pressure, and the like of a measured medium, typically a fluid, and that outputs a measurement result to an external unit has been known. Such a measurement device is equipped with a setting changing mechanism for making changes to various kinds of settings, such as zero point adjustment. For example, in the measurement device disclosed in JP-A-2016-001383, as the setting changing mechanism, a shaft (screw) and a rotary encoder are provided. A hole that communicates between an interior and an exterior is formed in a casing of the measurement device. The shaft is arranged penetrating the hole in the casing and is rotatable within the hole. The rotary encoder is mounted on a board arranged inside the casing. Inside the casing, the shaft is connected to the rotary encoder, and by rotating the shaft from the outside of the casing, the rotary encoder can be rotated. In the setting changing mechanism, changes to various kinds of settings are made based on a rotation direction and a rotation speed of the shaft detected by the rotary encoder.

In the measurement device, there is a case in which the casing requires waterproof and dustproof properties to prevent failures of devices arranged inside the casing. However, in conventional measurement devices, a hole to communicate an interior and an exterior of the casing is formed to provide a setting changing mechanism. A shaft is provided in the hole, and although a certain level of waterproof and dustproof properties can be obtained by sealing space between the shaft and an inner surface of the hole with a gasket, there have been a case in which adequate waterproof and dustproof cannot be achieved depending on a use environment of the measurement device.

It is an object of the present invention to provide a measurement device equipped with a setting changing mechanism to make changes to various kinds of settings, such as zero point adjustment, while ensuring waterproof and dustproof properties inside a casing.

### SUMMARY OF THE INVENTION

### BRIEF DESCRIPTION OF THE DRAWINGS

FIG. 1 is a front view of a measurement device according to a first embodiment;
FIG. 2 is a side view of the measurement device according to the first embodiment;
FIG. 3 is a perspective view of the measurement device according to the first embodiment;
FIG. 4 is a cross-section of the measurement device cut along a line IV-IV in FIG. 2, and is an enlarged partial cross-section in which a portion A is enlarged;
FIG. 5 is an enlarged partial-exploded perspective view in which a concave portion of the measurement device according to the first embodiment is enlarged;
FIG. 6 is a diagram corresponding to a cross-section cut along a line VI-VI in FIG. 4, and is a diagram for explaining a relationship between rotation of a magnet and a magnetic sensor;
FIG. 7 is a diagram illustrating a relationship between a rotation angle of the magnet and a detection level of the magnetic sensor in the embodiment;
FIG. 8 is a diagram illustrating a functional configuration relating to changes of various settings of the measurement device according to the first embodiment; and
FIG. 9 is a cross-section of a measurement device according to a comparative example, and is a diagram corresponding to FIG. 4 of the first embodiment.

### DETAILED DESCRIPTION OF THE PREFERRED EMBODIMENTS

Hereinafter, a measurement device and a rotation detection method according to an embodiment of the present invention will be explained in detail with reference to the drawings. The present invention is not limited to the embodiments explained below.

### First Embodiment

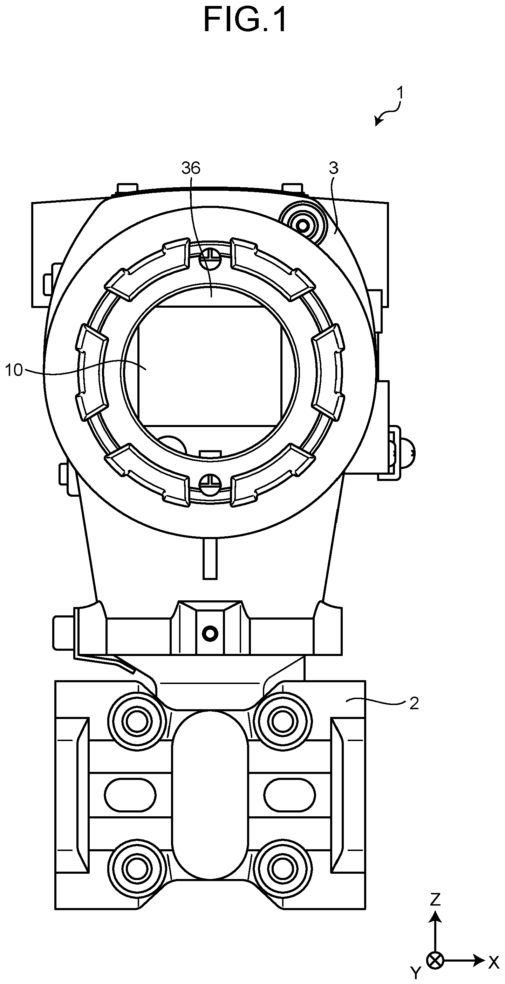

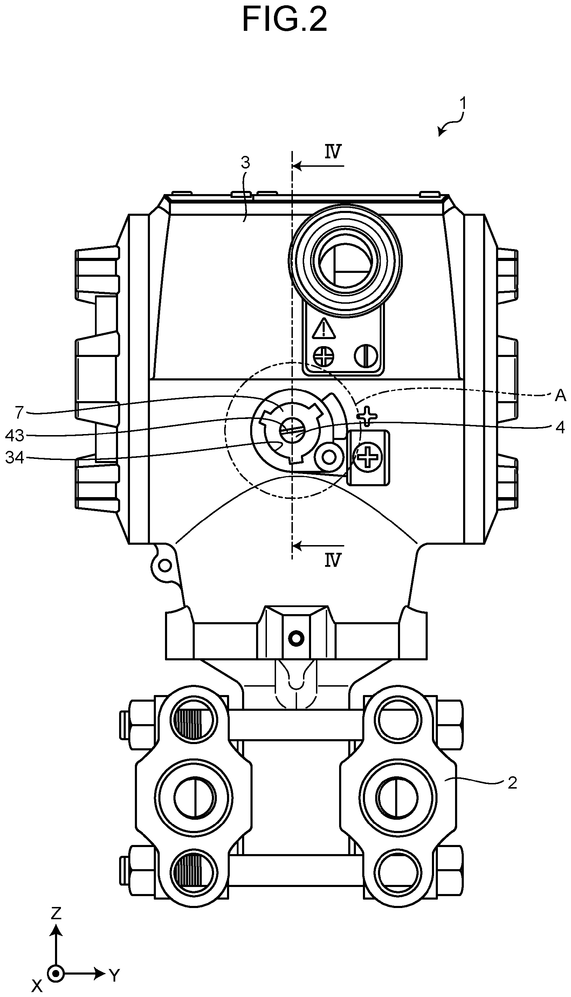

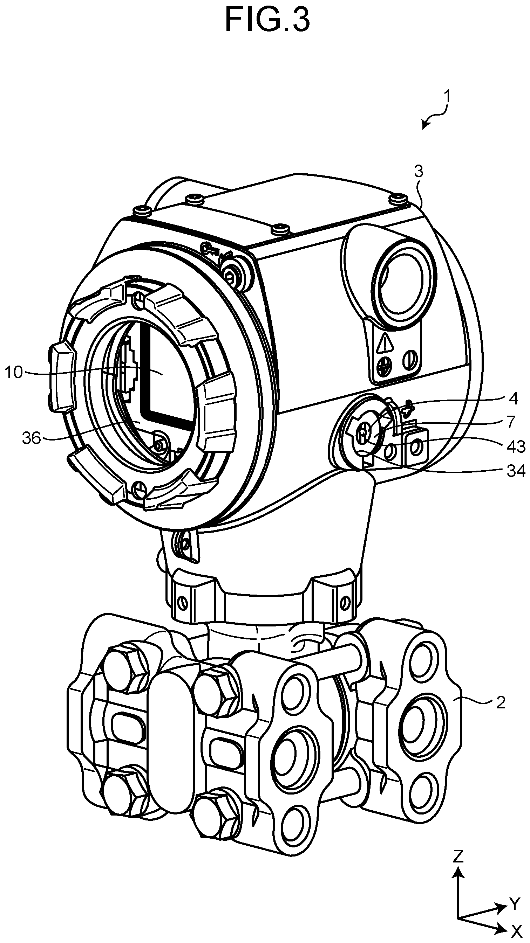

FIG. 1 is a front view of a measurement device according to a first embodiment. FIG. 2 is a side view of the measurement device according to the first embodiment. FIG. 3 is a perspective view of the measurement device according to the first embodiment. A measurement device 1 is a device that measures a state quantity of a measured medium, typically a fluid. The state quantity of a measured medium includes flow rate, pressure, temperature, and differential pressure.

The measurement device 1 includes a detecting unit 2. The detecting unit 2 is a part that detects state quantities of a measured medium, such as flow rate, pressure, temperature, and differential pressure. For example, the detecting unit 2 has a diaphragm (not illustrated) that deforms in response to the pressure of the measured medium, and the measurement device 1 measures the pressure, which is a state quantity, based on the amount of deformation of the diaphragm.

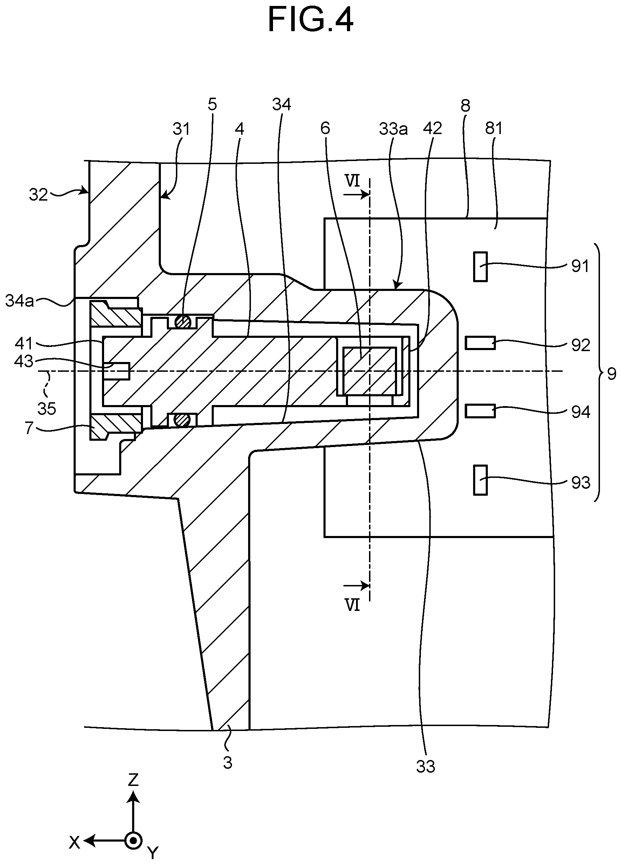

The measurement device 1 includes a casing 3. FIG. 4 is a cross-section of the measurement device cut along a line IV-IV in FIG. 2, and is an enlarged partial cross-section in which a portion A is enlarged. The interior of the casing 3 is hollow, and a space thereinside is a storage space that accommodates a circuit board and the like described later.

As illustrated in FIG. 4, a protruding portion 33 that is formed by protruding an inner circumferential surface 31 of the storage space is formed in the casing 3. In the protruding portion 33, a concave portion 34 that is recessed toward the storage space from an outer circumferential surface 32 of the casing 3 is formed. The concave portion 34 is recessed toward the storage space but does not penetrate through the casing 3, and does not communicate between the interior and the exterior of the casing 3.

Defining a direction in which the concave portion 34 extends as a first direction, an X-axis parallel to the first direction is defined. In the first embodiment, the first direction is a left-right direction in the front view of FIG. 1 and a depth direction in the side view of FIG. 2. Moreover, defining a second direction that is a direction perpendicular to the first direction, a Z-axis parallel to the second direction is defined. In the first embodiment, the second direction is a vertical direction in the front view of FIG. 1 and the side view of FIG. 2. Furthermore, defining a direction perpendicular to the first direction and the second direction as a third direction, a Y-axis parallel to the third direction is defined. In the first embodiment, the third direction is a depth direction in the front view of FIG. 1, and a left-right direction in the side view of FIG. 2.

In the casing 3, a window 36 enabling to view the inside of the storage space is arranged. At a position viewable through the window 36 inside the storage space, a display unit 10 is arranged. The display unit 10 is to display various kinds of setting information of the measurement device 1 and a detection result by the detecting unit 2, and is, for example, a liquid crystal display (LCD).

The measurement device 1 includes a shaft 4. The shaft 4 is a rod-shaped member, and is inserted in the concave portion 34. The shaft 4 is rotatable about a center axis 35 of the concave portion 34.

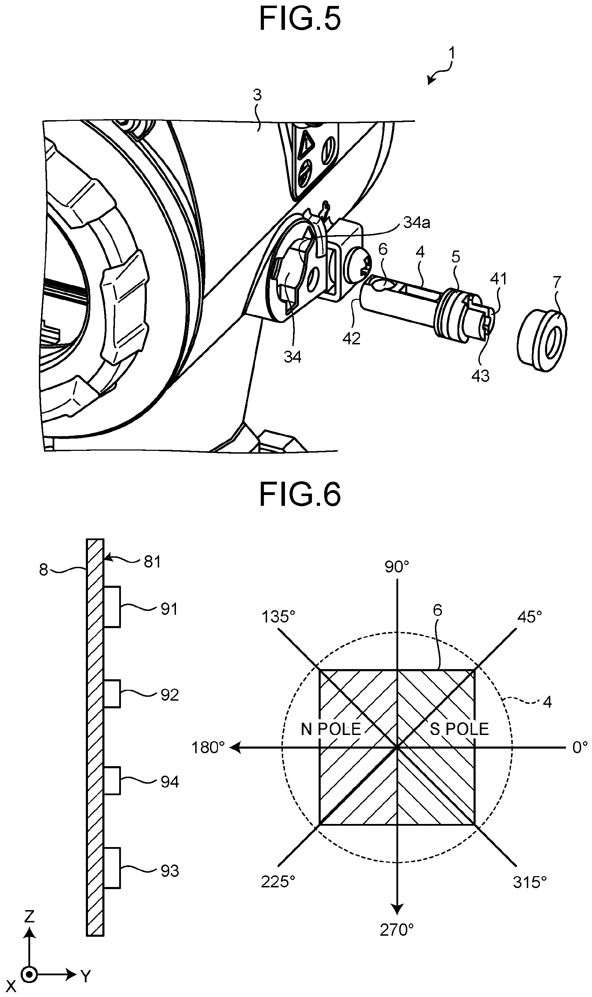

FIG. 5 is an enlarged partial-exploded perspective view in which a concave portion of the measurement device according to the first embodiment is enlarged. In the shaft 4, at an end 41 on a side of an entrance 34a of the concave portion 34 in a state of being inserted in the concave portion 34, an engaging portion 43 is formed. By engaging a tool with the engaging portion 43, the shaft 4 can be rotated. The engaging portion 43 is, for example, a groove, and it is possible to rotate the shaft 4 by engaging a flathead screwdriver therewith.

To the shaft 4, a gasket 5 that abuts on an inner circumferential surface of the concave portion 34 and an outer circumferential surface of the shaft in a state of being inserted in the concave portion 34, and that rotatably supports the shaft 4 is attached. With the gasket 5, entrance of water and dust into the interior of the concave portion 34 is prevented.

The measurement device 1 includes a magnet 6. The magnet 6 is a permanent magnet. The magnet 6 is arranged on a side of another end 42, which is on the opposite side to the side of the entrance 34a of the concave portion 34 in the shaft 4 in a state of being inserted in the concave portion 34. The magnet 6 is arranged on the shaft 4 such that the north pole and the south pole are aligned in a direction perpendicular to the first direction (X-axis). By rotating the shaft 4, the direction to which the N pole of the magnet 6 points and the direction to which the S pole points change. That is, by rotating the shaft 4, the magnetic field changes with rotation of the magnet 6.

The measurement device 1 includes a lid 7. The lid 7 is attached to the entrance 34a of the concave portion 34, and prevents the shaft 4 from falling off from the concave portion 34. The shape of the lid 7 is a cylindrical shape. In a state in which the lid 7 is attached to the entrance 34a of the concave portion 34 also, the engaging portion 43 of the shaft 4 is exposed. Therefore, it is possible to rotate the shaft 4 with the lid 7 attached, by engaging a tool with the engaging portion 43.

As illustrated in FIG. 4, the measurement device 1 includes a board 8. The board 8 is arranged inside the storage space of the casing 3. The board 8 has a mounting surface 81. The board 8 is arranged such that the mounting surface 81 faces the outer circumferential surface 33a of the protruding portion 33.

The measurement device 1 includes multiple magnetic sensors 91 to 94. In the following explanation, the magnetic sensors 91 to 94 are also referred to simply as magnetic sensor 9 without distinguishing from one another. The magnetic sensor 9 is mounted on the mounting surface 81 of the board 8.

For each of the magnetic sensors 9, a detectable direction of magnetic field is set. In the following explanation, the detectable direction of the magnetic field set for the magnetic sensor 9 is also referred to as a detection direction of the magnetic field simply.

[The magnetic sensors 91 to 94 are aligned and mounted on the mounting surface 81. The direction in which the magnetic sensors 91 to 94 are aligned is parallel to the second direction (Z-axis). The magnetic sensors 91 to 94 are mounted on the mounting surface 81, to have different detection directions of the magnetic field.

Viewed along the third direction (Y-axis), two each of the magnetic sensors 9 are arranged on both sides of the center axis 35 of the concave portion 34. More specifically, in the plane of a sheet of FIG. 4, above the center axis 35, the magnetic sensor 92 (the first magnetic sensor) and the magnetic sensor 91 (the second magnetic sensor) are arranged sequentially from the closest to the center axis 35. Below the center axis 35, the magnetic sensor 94 (the first magnetic sensor) and the magnetic sensor 93 (the second magnetic sensor) are arranged from the closest to the center axis 35.

The magnetic sensor 92 and the magnetic sensor 94 are arranged such that the detection direction of the magnetic field is parallel to the first direction (X-axis). The magnetic sensor 91 and the magnetic sensor 93 are arranged such that the detection direction of the magnetic field is parallel to the second direction (Z-axis).

With such an arrangement of the magnetic sensors 91 to 94 aligned with the detection directions of the magnetic field, when the magnet 6 rotates along with the shaft 4, causing a change in the magnetic field, the detection levels of the magnetic sensors 91 to 94 also change. The relationship between the change in the magnetic field and the detection levels of the magnetic sensors 91 to 94 will be explained in detail later.

When viewed along the third direction (Y-axis), the position of the magnet 6 and the position at which the magnetic sensors 91 to 94 are aligned are misaligned along the first direction (X-axis). More specifically, the position of the magnet 6 is shifted toward the entrance 34a of the concave portion 34 relative to the position at which the magnetic sensors 91 to 94 are aligned. When the position of the magnet 6 is shifted toward the entrance 34a of the concave portion 34 relative to the position at which the magnetic sensors 91 to 94 are aligned, the depth of the concave portion 34 can be made shallow. When the depth of the concave portion 34 is shallow, a protruding amount of the protruding portion 33 toward the storage space is small. Even with the same size of the casing 3, when the protruding amount of the protruding portion 33 is smaller, the storage space becomes larger. Therefore, the flexibility in arranging various kinds of components in the storage space is improved. Moreover, downsizing of the casing 3, that is, downsizing of the measurement device 1 is possible while maintaining sufficient room in the storage space.

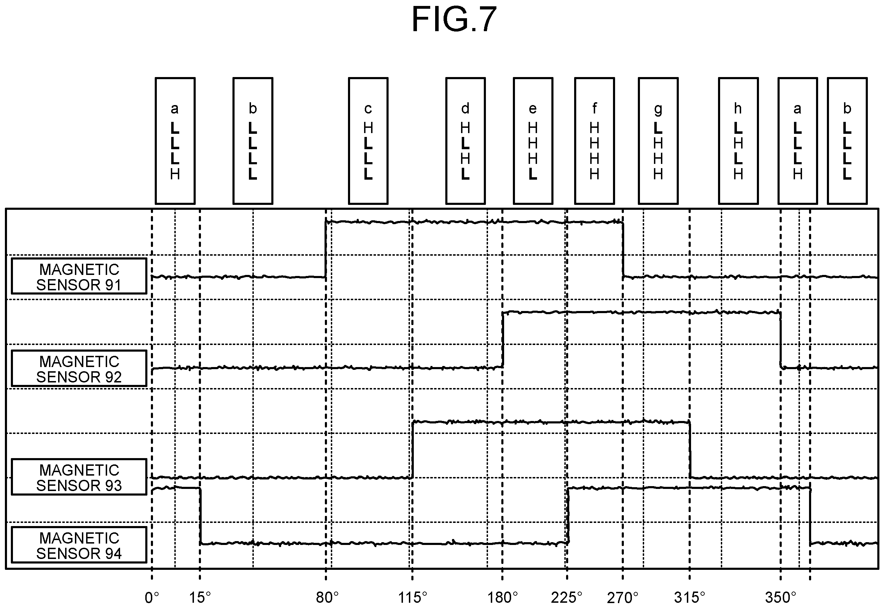

FIG. 6 is a diagram corresponding to the cross-section cut along a line VI-VI in FIG. 4, and is a diagram for explaining the relationship between rotation of the magnet and the magnetic sensor. FIG. 7 is a diagram illustrating a relationship between rotation of the magnet and the detection level of the magnetic sensor according to the first embodiment.

As illustrated in FIG. 6, a state in which the north pole of the magnet 6 faces the mounting surface 81 of the board 8 is defined as 0°. Moreover, as the shaft 4 and the magnet 6 rotate in counterclockwise, the rotation angle increases.

The magnetic sensors 91 to 94 output that the detection level is high (H) when a magnetic field stronger than a threshold is detected, setting a detected magnetic field as the threshold, and output that the detection level is low (L) when the magnetic field weaker than the threshold is detected.

The detection levels of the magnetic sensors 91 to 94 vary according to a rotation angle of the magnet 6. In FIG. 7, the horizontal axis represents the rotation angle of the magnet 6, and the vertical axis represents the detection level of the respective magnetic sensors 91 to 94. In the following explanation, the detection levels of the magnetic sensors 91 to 94 are represented as (detection level of the magnetic sensor 91, detection level of the magnetic sensor 92, detection level of the magnetic sensor 93, detection level of the magnetic sensor 94).

Within a range of the rotation angle of the magnet 6 from 0° to 15°, the detection levels of the magnetic sensor 91 to 94 are a(L, L, L, H). Within a range of the detection angle of the magnet 6 from 15° to 80°, the detection levels of the magnetic sensors 91 to 94 are b(L, L, L, L). Within a range of the detection angle of the magnet 6 from 80° to 115°, the detection levels of the magnetic sensors 91 to 94 are c(H, L, L, L). Within a range of the detection angle of the magnet 6 from 115° to 180°, the detection levels of the magnetic sensors 91 to 94 are d(H, L, H, L). Within a range of the detection angle of the magnet 6 from 180° to 225°, the detection levels of the magnetic sensors 91 to 94 are e(H, H, H, L). Within a range of the detection angle of the magnet 6 from 225° to 270°, the detection levels of the magnetic sensors 91 to 94 are f(H, H, H, H). Within a range of the detection angle of the magnet 6 from 270° to 315°, the detection levels of the magnetic sensors 91 to 94 are g(L, H, H, H). Within a range of the detection angle of the magnet 6 from 315° to 350°, the detection levels of the magnetic sensors 91 to 94 are h(L, H, L, H). Once the rotation angle of the magnet exceeds 350°, the detection levels from a to h are repeated again.

Therefore, for example, when the detection levels changes from a to b, it is understood that the magnet 6 and the shaft 4 have rotated counterclockwise. Moreover, when the detection levels have changed from a to h without going through b to g, it is understood that the magnet 6 and the shaft 4 have rotated clockwise. Furthermore, from cycles of changes in the detection levels, the rotation speed of the magnet 6 and the shaft 4 can be grasped.

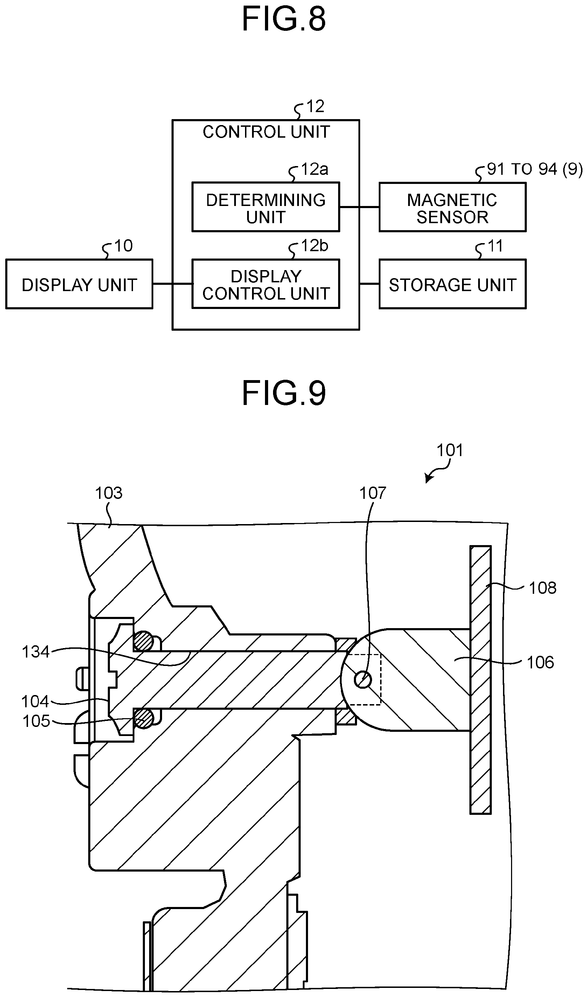

In the measurement device 1, based on the rotation direction and the rotation speed of the shaft 4, changes to various kinds of settings, such as zero point adjustment, are made. FIG. 8 is a diagram illustrating a functional configuration relating to changes of various kinds of settings of the measurement device according to the first embodiment. The measurement device 1 includes a storage unit 11 and a control unit 12.

In the storage unit 11, data and programs necessary for various kinds of processing by the control unit 12 are stored. The storage unit 11 is, for example, a semiconductor memory device, such as a random access memory (RAM), a read only memory (ROM), and a flash memory, or a storage device, such as a hard disk and an optical disk.

The control unit 12 includes a determining unit 12a and a display control unit 12b. The determining unit 12a receives the detection levels transmitted from the magnetic sensors 91 to 94, and determines the rotation direction and the rotation speed of the shaft 4 based on the change in the detection level. Moreover, it changes a setting based on the rotation direction and the rotation speed, and instructs a change in display to the display control unit 12b.

The display control unit 12b causes the display unit 10 to change display based on the instruction from the determining unit 12a. For example, when the measurement device 1 is a device that measures a pressure of a measured medium and the change made to various kinds of settings is changing the unit of pressure, it causes the display unit 10 to change the displayed unit 10.

The control unit 12 is, for example, an electronic circuit. Examples of the electronic circuit include an integrated circuit, such as an application specific integrated circuit and a field programmable gate array (FPGA), a central processing unit (CPU), a micro processing unit, or the like.

### Comparative Example

FIG. 9 is a cross-section of a measurement device according to a comparative example, and is a diagram corresponding to FIG. 4 of the first embodiment. In a measurement device 101 according to the comparative example, a through hole 134 that communicates between an interior and an exterior is formed in a casing 103. In the measurement device 101 according to the comparative example, a shaft 104 is arranged penetrating through the through hole 134. In the measurement device 101 according to the comparative example, a rotary encoder 106 is mounted on a board 108 arranged inside the casing 103. An end portion of the shaft 104 is connected to the rotary encoder 106 through a pin 107. The pin 107 also functions as a stopper of the shaft 104. In the measurement device 101 according to the comparative example, the rotary encoder 106 rotates in conjunction with the shaft 104. In the measurement device 101 according to the comparative example, a gasket 105 that abuts on an outer circumferential surface of the shaft 104 and an inner circumferential surface of the through hole 134 is arranged. In the measurement device according to the comparative example, by detecting rotation of the shaft 104 with the rotary encoder 106, changes of various kinds of settings, such as zero point adjustment, and the like are made.

As described above, in the measurement device 101 according to the comparative example, because the through hole 134 is formed in the casing 103, water and dust can enter the interior of the casing. Although a certain level of waterproof and dustproof properties can be obtained because the gasket 105 is provided, there have been a case in which adequate waterproof and dustproof cannot be achieved depending on a use environment of the measurement device 101.

### Summary of Effects

The measurement device 1 explained above includes the casing 3 in which a storage space is formed thereinside, the board 8 that has the mounting surface 81 and is housed in the storage space, the magnetic sensor 9 that is mounted on the mounting surface 81, and the detecting unit 2 that is arranged outside the casing 3 and that detects state quantities of a measured medium. In the casing 3, the protruding portion 33 that is formed by protruding the inner circumferential surface of the storage space is formed. In the protruding portion 33, the concave portion 34 that recesses from the outer circumferential surface of the casing 3 toward the storage space is formed. The board 8 is arranged such that the mounting surface 81 faces the protruding portion 33.

The concave portion 34 that is formed in the casing 3 and in which the shaft 4 can be inserted is a recess not penetrating through the casing 3. Therefore, unlike the measurement device 101 according to the comparative example, water and dust do not enter the storage space of the casing 3 through the concave portion 34. Therefore, it is possible to obtain more reliable waterproof and dustproof properties. Moreover, because the magnetic sensor is arranged on the mounting surface 81 of the board 8 arranged facing the protruding portion 33, a change in the magnetic field when the magnet 6 rotates in the concave portion 34 can be detected.

In the measurement device 101 according to the comparative example, because the through hole 134 formed in the casing 103 for the shaft 104 to penetrate therethrough communicates the interior and the exterior of the casing 103, it can be a weakness in ensuring pressure resistance and explosion-proof properties. On the other hand, in the measurement device 1 according to the first embodiment, because a hole that communicates between the interior and the exterior to insert the shaft 4 in a penetrating manner is not formed, it is possible to obtain pressure resistance and explosion-proof properties more reliably.

Moreover, on the mounting surface 81, the multiple magnetic sensors 91 to 94 are mounted, and when the direction in which the concave portion 34 extends is defined as the first direction, the multiple magnetic sensors 91 to 94 are aligned along the second direction perpendicular to the first direction. Because the multiple magnetic sensors 91 to 94 are aligned along the second direction, the rotation angle and the rotation speed can be determined based on a change in the detection levels of the magnetic sensors 91 to 94 when the magnet 6 in the concave portion 34 rotates.

Furthermore, the multiple magnetic sensors 91 to 93 include the first magnetic sensors 92, 94 the detection direction of the magnetic field of which are parallel to the first direction, and the second magnetic sensors 91, 93, the detection direction of the magnetic field of which is parallel to the second direction, and the first magnetic sensors 92, 94 are arranged symmetrically about the center axis 35 of the concave portion 34, and the second magnetic sensors 91, 93 are arranged symmetrically about the center axis 35 when viewed along the third direction that is perpendicular to the first direction and the second direction. With such an arrangement of the multiple magnetic sensors 91 to 93, it is possible to determine the rotation angle and the rotation speed based on a change in the detection level of each of the magnetic sensors 91 to 94 when the magnet 6 in the concave portion 34 rotates. By changing the quantity and the arrangement of the magnetic sensors 9, it is possible to achieve higher resolution.

Moreover, the measurement device 1 further includes the shaft 4 that is inserted in the concave portion 34 and is arranged rotatably about the center axis 35 of the concave portion 34, and the magnet 6 that is formed such that the N pole and the S pole are aligned in the direction perpendicular to the first direction and that is attached to the shaft 4.

Because the shaft 4 inserted in the concave portion 34 is arranged without penetrating through the casing 3, it is possible to obtain waterproof, dustproof, pressure resistance, and explosion-proof properties more reliably. Because the magnet 6 rotates along with the shaft 4, the magnetic field changes inside the casing 3. By detecting this change in the magnetic field by the magnetic sensor 9, the rotation direction and the rotation speed of the shaft 4 can be detected. Therefore, it is possible to detect the rotation direction and the rotation speed of the shaft 4 without forming a through hole in the casing 3. It becomes possible to change various kinds of settings in the measurement device 1 based on the detected rotation direction and rotation speed of the shaft 4.

Unlike the measurement device 101 according to the comparative example, the shaft 4 can be arranged just by inserting in the concave portion 34 without a process of inserting the pin 107 in the shaft 104 and the rotary encoder 106 inside the casing 103 to prevent the shaft 104 from falling off. Therefore, the assembling work of the measurement device 1 can be simplified. Moreover, in the measurement device 101 according to the comparative example, because the shaft 104 and the rotary encoder 106 are connected through a pin, backlash occurs when the shaft 104 is rotated. On the other hand, in the measurement device 1 according to the first embodiment, a rotary encoder is not provided, and there is no connecting structure to connect with a mechanism to detect rotation of the shaft 4. Therefore, backlash does not occur, and seamless operation feeling can be obtained.

Unlike the measurement device 101 according to the comparative example, it is not necessary to connect the shaft 104 and the rotary encoder 106 by using the pin 107 inside the casing 103. Therefore, it is easy to replace or retrofit the shaft 4 in the measurement device 1 according to the first embodiment.

Moreover, when it is viewed along the third direction, the magnet 6 is arranged at a position shifted toward the entrance 34a of the concave portion 34 along the first direction relative to the magnetic sensors 91 to 94. When the position of the magnet 6 is shifted toward the entrance 34a of the concave portion 34 relative to the position at which the magnetic sensors 91 to 94 are aligned, the depth of the concave portion 34 can be made shallow. When the depth of the concave portion 34 is shallow, a protruding amount of the protruding portion 33 toward the storage space is small. Even with the same size of the casing 3, when the protruding amount of the protruding portion 33 is smaller, the storage space becomes larger. Therefore, the flexibility in arranging various kinds of components in the storage space of the casing 3 is improved. Moreover, downsizing of the casing 3, that is, downsizing of the measurement device 1 is possible while maintaining sufficient room in the storage space.

Furthermore, the determining unit 12a that determines the rotation direction of the shaft 4 based on a detection result of the magnetic sensors 91 to 94 is further included. By providing the determining unit 12a in the measurement device 1, it is possible to determine the rotation direction and the rotation speed of the shaft 4 by the measurement device 1, and to make changes to various kinds of settings.

Moreover, the measurement device 1 further includes the gasket 5 that abuts on the inner circumferential surface of the concave portion 34 and the outer circumferential surface of the shaft 4, and that rotatably supports the shaft 4 about the center axis 35. With the gasket 5, entrance of water and dust to the concave portion 34 can be prevented.

Furthermore, the measurement device 1 further includes the lid 7 that is fit in the entrance 34a of the concave portion 34. In the shaft 4, at an end portion on the side of the entrance 34a of the concave portion 34, the engaging portion 43 with which a tool to rotate the shaft 4 is engaged is formed, and the lid 7 is formed in a cylindrical shape exposing the engaging portion 43. Because the engaging portion 43 is exposed while the lid 7 is fit in the entrance 34a of the concave portion 34, it is possible to rotate the shaft 4 by inserting the tool inside the lid 7 while preventing the shaft 4 from falling off with the lid 7.

Moreover, the window 36 that enables to view the inside of the storage space is formed in the casing 3, and the measurement device 1 further includes the display unit 10 that is arranged inside the storage space viewably through the window 36. It is possible to display measurement results obtained by the measurement device 1 and the like on the display unit 10.

Moreover, the measurement device 1 further includes the display control unit 12b that changes display of the display unit 10 based on a detection result of the magnetic sensor 9. For example, when various kinds of setting values of the measurement device 1 are displayed on the display unit 10, by rotating the shaft 4 while checking the setting value, it is possible to change various kinds of settings.

Furthermore, a rotation detection method of the shaft 4 of the measurement device 1 includes a step of receiving the detection levels of the multiple magnetic sensors 91 to 94, a step of determining a rotation direction of the shaft 4 based on a change in the detection levels of the multiple magnetic sensors 91 to 94. Because a rotation direction and a rotation speed can be detected based on a change in the magnetic field caused by rotation of the shaft 4, it becomes unnecessary to form a hole that communicates between the interior and the exterior of the casing 3, and various effects as described above can be obtained.

### Others

Some examples of combinations of disclosed technical features will be described below.
(1) A measurement device comprising: a casing in which a storage space is formed thereinside; a board that has a mounting surface, and that is housed in the storage space; a magnetic sensor mounted on the mounting surface; and a detecting unit that is arranged outside the casing, and that detects a state quantity of a measured medium, wherein a protruding portion that is formed by protruding an inner circumferential surface of the storage space is formed in the casing, a concave portion formed by recessing toward the storage space from an outer circumferential surface of the casing is formed in the protruding portion, and the board is arranged such that the mounting surface faces the protruding portion.
(2) The measurement device according to (1), wherein a plurality of the magnetic sensors are mounted on the mounting surface, and when a direction in which the concave portion extends is a first direction, the magnetic sensors are aligned along a second direction that is perpendicular to the first direction.
(3) The measurement device according to (2), wherein the magnetic sensors include two units of first magnetic sensors, a detection direction of a magnetic field of which is parallel to the first direction, and two units of second magnetic sensors, a detection direction of a magnetic field of which is parallel to the second direction, and the first magnetic sensors are arranged symmetrically about a center axis of the concave portion when viewed along a third direction that is perpendicular to the first direction and the second direction, and the second magnetic sensors are arranged symmetrically about the center axis.
(4) The measurement device according to any one of (1) to (3), further comprising: a shaft that is inserted in the concave portion to be rotatable around a center axis of the concave portion; and a magnet that is attached to the shaft such that an N pole and an S pole are aligned in a direction perpendicular to a first direction when a direction in which the concave portion extends is the first direction.
(5) The measurement device according to (4), wherein the magnet is arranged at a position shifted toward an entrance of the concave portion relative to the magnetic sensor along the first direction when viewed along a third direction that is perpendicular to the first direction and the second direction.
(6) The measurement device according to (4) or (5), further comprising a determining unit that determines a rotation direction of the shaft based on a detection result of the magnetic sensor.
(7) The measurement device according to any one of (4) to (6), further comprising a gasket that abuts on the inner circumferential surface of the concave portion and an outer circumferential surface of the shaft, and that supports the shaft rotatably about the center axis.
(8) The measurement device according to any one of (4) to (7), further comprising a lid that is fit in the entrance of the concave portion, wherein at an end portion on the entrance of the concave portion in the shaft, an engaging portion that can be engaged with a tool to rotate the shaft is formed, and the lid is formed in a cylindrical shape that exposes the engaging portion.
(9) The measurement device according to any one of (1) to (8), wherein a window that enables to view the interior of the storage space is formed in the casing, the device further comprising a display unit that is arranged inside the storage space, and that can be viewed through the window.
(10) The measurement device according to (9), further comprising a display control unit that changes display of the display unit based on a detection result of the magnetic sensor.
(11) A rotation detection method to detect a rotation direction of a shaft in a measurement device that includes a casing in which a storage space is formed thereinside, and in which a protruding portion is formed, the protruding portion in which an inner circumferential surface of the storage space protrudes, and that has a concave portion formed in the protruding portion recessing from an exterior toward the storage space; a board that has a mounting surface facing the protruding portion, and that is housed in the storage space; a plurality of magnetic sensors mounted on the mounting surface; a detecting unit that is arranged outside the casing, and that detects a state quantity of a measured medium; and a shaft that is inserted in the concave portion to be arranged rotatably about a center axis of the concave portion, the method, wherein when a direction in which the concave portion extends is defined as first direction, the magnetic sensors are aligned along a second direction perpendicular to the first direction, the magnetic sensors include two units of first magnetic sensors, a detection direction of a magnetic field of which is parallel to the first direction, and two units of second magnetic sensors, a detection direction of a magnetic field of which is parallel to the second direction, and the first magnetic sensors are arranged symmetrically about a center axis of the concave portion when viewed along a third direction that is perpendicular to the first direction and the second direction, and the second magnetic sensors are arranged symmetrically about the center axis, the method comprising: receiving a detection level of the magnetic sensors; and determining a rotation direction of the shaft based on a change in the detection level of the magnetic sensors.

According to the present invention, there is an effect that a measurement device equipped with a setting changing mechanism that makes changes to various kinds of settings, such as zero point adjustment, while ensuring waterproof and dustproof properties inside a casing can be obtained.

## Claims

1. A measurement device (1) comprising:
a casing (3) in which a storage space is formed thereinside;
a board (8) that has a mounting surface (81), and that is housed in the storage space;
a magnetic sensor (91-94) mounted on the mounting surface; and
a detecting unit (2) that is arranged outside the casing, and that detects a state quantity of a measured medium, wherein
a protruding portion (33) that is formed by protruding an inner circumferential surface of the storage space is formed in the casing,
a concave portion (34) formed by recessing toward the storage space from an outer circumferential surface of the casing is formed in the protruding portion, and
the board is arranged such that the mounting surface faces the protruding portion.

2. The measurement device according to claim 1, wherein
a plurality of the magnetic sensors are mounted on the mounting surface, and
when a direction in which the concave portion extends is a first direction,
the magnetic sensors are aligned along a second direction that is perpendicular to the first direction.

3. The measurement device according to claim 2, wherein
the magnetic sensors include two units of first magnetic sensors (92,94), a detection direction of a magnetic field of which is parallel to the first direction, and two units of second magnetic sensors (91,93), a detection direction of a magnetic field of which is parallel to the second direction, and
the first magnetic sensors are arranged symmetrically about a center axis of the concave portion when viewed along a third direction that is perpendicular to the first direction and the second direction, and the second magnetic sensors are arranged symmetrically about the center axis.

4. The measurement device according to any one of claims 1 to 3, further comprising:
a shaft (4) that is inserted in the concave portion to be rotatable around a center axis of the concave portion; and
a magnet (6) that is attached to the shaft such that an N pole and an S pole are aligned in a direction perpendicular to a first direction when a direction in which the concave portion extends is the first direction.

5. The measurement device according to claim 4, wherein
the magnet is arranged at a position shifted toward an entrance of the concave portion relative to the magnetic sensor along the first direction when viewed along a third direction that is perpendicular to the first direction and the second direction.

6. The measurement device according to claims 4 or 5, further comprising
a determining unit (12a) that determines a rotation direction of the shaft based on a detection result of the magnetic sensor.

7. The measurement device according to any one of claims 4 to 6, further comprising
a gasket (5) that abuts on the inner circumferential surface of the concave portion and an outer circumferential surface of the shaft, and that supports the shaft rotatably about the center axis.

8. The measurement device according to any one of claims 4 to 7, further comprising
a lid (7) that is fit in the entrance of the concave portion, wherein
at an end portion on the entrance of the concave portion in the shaft, an engaging portion (43) that can be engaged with a tool to rotate the shaft is formed, and
the lid is formed in a cylindrical shape that exposes the engaging portion.

9. The measurement device according to any one of claims 1 to 8, wherein
a window (36) that enables to view the interior of the storage space is formed in the casing,
the device further comprising
a display unit (10) that is arranged inside the storage space, and that can be viewed through the window.

10. The measurement device according to claim 9, further comprising
a display control unit (12b) that changes display of the display unit based on a detection result of the magnetic sensor.

11. A rotation detection method to detect a rotation direction of a shaft in a measurement device that includes
a casing in which a storage space is formed thereinside, and in which a protruding portion is formed, the protruding portion in which an inner circumferential surface of the storage space protrudes, and that has a concave portion formed in the protruding portion recessing from an exterior toward the storage space;
a board that has a mounting surface facing the protruding portion, and that is housed in the storage space;
a plurality of magnetic sensors mounted on the mounting surface;
a detecting unit that is arranged outside the casing, and that detects a state quantity of a measured medium; and
a shaft that is inserted in the concave portion to be arranged rotatably about a center axis of the concave portion, the method, wherein
when a direction in which the concave portion extends is defined as first direction, the magnetic sensors are aligned along a second direction perpendicular to the first direction,
the magnetic sensors include two units of first magnetic sensors, a detection direction of a magnetic field of which is parallel to the first direction, and two units of second magnetic sensors, a detection direction of a magnetic field of which is parallel to the second direction, and
the first magnetic sensors are arranged symmetrically about a center axis of the concave portion when viewed along a third direction that is perpendicular to the first direction and the second direction, and the second magnetic sensors are arranged symmetrically about the center axis, the method comprising:
receiving a detection level of the magnetic sensors; and
determining a rotation direction of the shaft based on a change in the detection level of the magnetic sensors.
